Europäisches Patentamt

European Patent Office

Office européen des brevets

(11) Publication number: **0 266 900**

**A2**

(12) **EUROPEAN PATENT APPLICATION**

(21) Application number: 87308757.1

(51) Int. Cl.⁴: **B29C 45/16**

(22) Date of filing: 02.10.87

(30) Priority: 04.10.86 DE 3633884

(43) Date of publication of application:
11.05.88 Bulletin 88/19

(84) Designated Contracting States:
BE FR GB IT NL

(71) Applicant: MINNESOTA MINING AND
MANUFACTURING COMPANY
3M Center, P.O. Box 33427
St. Paul, Minnesota 55133-3427(US)

(72) Inventor: Viebranz, Manfred c/o Minnesota
Mining and
Manufacturing Company 2501 Hudson Road
P.O. Box 33427 St. Paul Minnesota 55133(US)
Inventor: Bock, Manfred L. c/o Minnesota
Mining and
Manufacturing Company 2501 Hudson Road
P.O. Box 33427 St. Paul Minnesota 55133(US)

(74) Representative: Baillie, Iain Cameron et al
c/o Ladas & Parry Isartorplatz 5
D-8000 München 2(DE)

(54) **Method and apparatus for manufacturing stress-controlling resilient enclosures for electrical medium and high voltage connectors.**

(57) Method for manufacturing resilient sleeve-shaped plastic articles which comprise a plurality of layers of joined sleeve-shaped plastic partial articles and are shiftable onto electrical connectors, by layer-wise injection molding, wherein a plurality of cores are moved cyclically through a series of mold cavities and are provided in the mold cavities, by injection molding, with the partial articles which are subsequent in the layer structure.

FIG.1

EP 0 266 900 A2

## METHOD AND APPRATUS FOR MANUFACTURING STRESS-CONTROLLING RESILIENT ENCLOSURES FOR ELECTRICAL MEDIUM AND HIGH VOLTAGE CONNECTORS

The invention relates to a method and an apparatus for manufacturing resilient sleeve-shaped plastic articles which comprise a plurality of layers of joined sleeve-shaped plastic partial articles and are shiftable onto electrical medium or high voltage connectors, particularly elbow plug connectors, by layer-wise injection molding wherein preferably a first, innermost partial article is manufactured form a plastic material of low electrical conductivity, a further partial article is manufactured from electrically insulating plastic material, and an outer partial article is manufactured from plastic material of low electrical conductivity.

Elastomeric articles which have a layered structure of different plastic materials are difficult to manufacture economically if what matter is a throughgoing faultless surface interconnection of the layer-like partial articles, and/or the article is of a shape which is not very simple, e.g. the shape of an open hollow body. Additional difficulties arise if still also certain electrical properties must be maintained. This holds particularly if the article is an elastomeric, and possibly also stress-controlling, enclosure for an electrical connector for medium voltage or high voltage, particularly a connector in the shape of an elbow plug connector. In such connectors, an innermost partial article forms a field smoothening electrode of electrically slightly conductive material, a central partial article forms an elastomeric electrical insulation, and an outer partial article forms an electrically slightly conductive elastomeric shield. The shape of the article, particularly of its interior wall, must be adapted as exactly as possible to the shape of the connector parts to be enclosed, particularly a male and a female connector part, in order that the article can be easily shifted onto the connector parts and will thereafter be in close contact with the connector parts.

Such multi-layered elastomeric articles which serve as enclosures for electrical purposes have been hitherto manufactured, according to the internal state of the art of the applicant, in that first the innermost and an outer partial article were produced separately by injection molding with the use of corresponding cores; thereafter, the outer partial article was removed form its core, and the inner partial article was arranged in the interior of the outer partial article; finally, then the interspace between the aforementioned partial articles was filled-out with elastomeric plastic mass. Since the cores normally are constituents of an injection molding apparatus, the aforedescribed mode of operation normally requires that also the inner partial article is removed from a core used for its manufacture, and drawn onto another core in order to become arranged in the interior of the outer partial article. These steps, as well as the correct aligning of the inner and outer partial articles, require a considerable expense of labour and time; in that time, the partial articles will cool down, whereby a re-heating becomes necessary which in turn requires time. A further disadvantage consists in that degasing of the plastic mass injected between two partial articles can proceed only very slowly; this will further increase the time demand for the curing of the article, i.e. for the completion of its manufacture. The high expense of labour and time, and the complexity of the operating steps make the aforedescribed method of manufacture less suited for larger production series or even an automatic mass production. Furthermore, it has been found that enclosures for medium and high voltage connectors which have been produced in accordance with that method are susceptible to electrical trouble; particularly glow discharges and breakthroughs may occur in the area of the inner boundary of the electrically slightly conductive outer partial article; thereby, the insulating and stress controlling properties of the article may change disadvantageously, and/or the article can be damaged or even become inoperative.. Such trouble obviously is due to electrical inhomogeneities of the manufactured articles.

It is the object of the invention to provide a method and an apparatus by which elastomeric articles of the aforedescribed kind can be manufactured with a reduced time demand and a simple possibility of automation; more particularly, the manufactured plastic articles can be free of disturbing electrical inhomogeneities.

According to the invention, that object is attained by the method according to claim 1', and the apparatus according to claim 6, respectively.

According to the invention, the articles are manufactured in series production. To that end, a core is cyclically conveyed through a series of injection molding mold cavities and provided there with successive layers of molded-on partial articles. During the whole process of manufacture, the product which grows layer by layer remains on the core, whereby intricate intermediate steps of operation are avoided and the products can be rapidly conveyed into the next mold cavity; thereby, it is achieved that the time demand for the manufacture of the article is essentially determined only by the time periods required for the injection molding and curing. At the end of the manufacturing process, the removal of the core is relatively simple because the interior space of the article is in any case designed so that the article can be easily shifted onto a correspondingly shaped body or again drawn off from such a body. As will be readily appreciated, the method according to the invention is particularly suited to be performed automatically at high production speeds. The quality of the manufactured article is high because during the manufacturing process proper, manual operations are not necessary, and thus human imperfection cannot cause disadvantages. Since also the conveying of the products between the individual mold cavities can be done automatically and within short time, a reheating of the products between the individual manufacturing steps is not necessary; this will also have a favourable effect on the quality of the manufactured articles. This will become apparent particularly in the important advantage that the electrical safety of the articles manufactured in accordance with the invention is particularly high. There are practically no losses by glow discharge, breakthroughs, and the like.

Because of the obtainable high manufacturing speeds and the avoiding of manual operation steps, the method according to the invention will also result in a considerable reduction of the manufacturing costs.

A cyclic manufacture of a partly two-layered elastomeric article, wherein the two layers consist of electrically insulating and electrically slightly conductive plastic material, respectively, is known from the European disclosure letter 0078934. This involves the manufacture of contact mats for keyboards. Also the German disclosure letter 28 22 033 describes a cyclic method for the manufacture of contact mats. It is not indicated in the said publications, however, that and how the methods and devices described therein could be suitable and advantageous in the manufacture of multi-layered elastomeric hollow bodies which are suitable as enclosures for electrical connectors.

Another cyclic injection molding technique for the manufacture of simple two-layered plastic articles is known from the German disclosure letter 28 34 211. In that method, however, complicated exchange movements must be performed with mold parts of an injection mold, and the method obviously is suitable only for two-layered articles.

The manufacture of a two-layered elastomeric enclosure for electrical connectors by injection molding of an interior sleeve and subsequent injection molding of an exterior sleeve onto the interior sleeve is known from the German disclosure letter 14 65 493. There is, however, no suggestion of a cyclic manufacture and/or an apparatus suitable therefor, and obviously, more than two layers have not been contemplated.

In the method according to the invention, a further simplification is possible by manufacturing the various partial articles essentially simultaneously. This permits a considerable simplification of the apparatus. The same is true also for the further development that the mold cavities are commonly opened and closed. Then, the partial mold cavities, from which the mold cavities are formed, can be provided for all mold cavities in one and the same invention mold parts.

If the articles to be manufactured have a complicated shape, a development may be appropriate in which in at least one of the mold cavities, the inserted core is supplemented by an auxiliary core moved into the mold cavity, and the auxiliary core is again removed from the mold cavity prior to the removal of the core.

The apparatus according to the invention, according to claim 6, which is particularly well suited for performing the method according to the invention has a very simple structure and can be operated in a simple manner with a high operating speed.

The invention will be subsequently described by means of an embodiment example in connection with the drawing.

Fig. 1 is a diagrammatic plan view of the lower die of an injection molding apparatus according to the invention, with the upper die being not illustrated, and shows the injection molding apparatus at the end of an injection molding cycle, prior to the removal of the products obtained in the individual steps.

Fig. 2 is a diagrammatic sectional view along line II-II of Fig. 1.

Fig. 3 shows a diagrammatic sectional view which is enlarged as compared to Figs. 1 and 2, an article manufactured in accordance with the invention, the article being of the kind of article illustrated in Figs. 1 and 2.

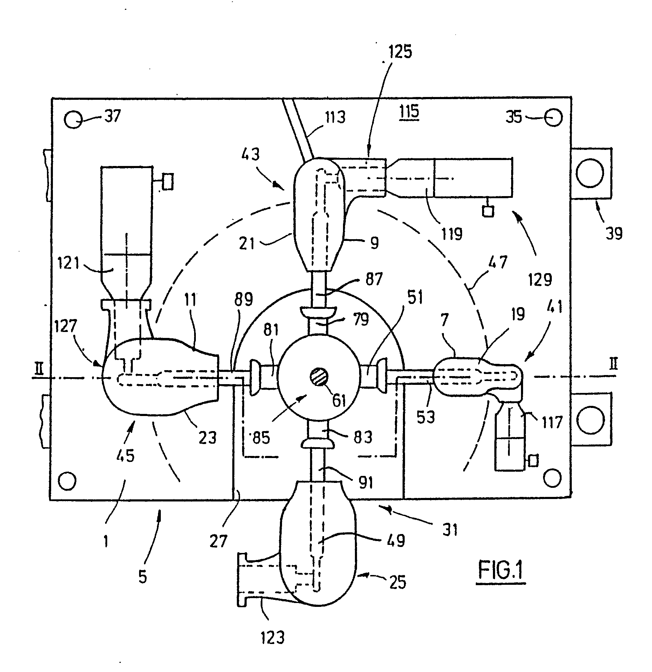

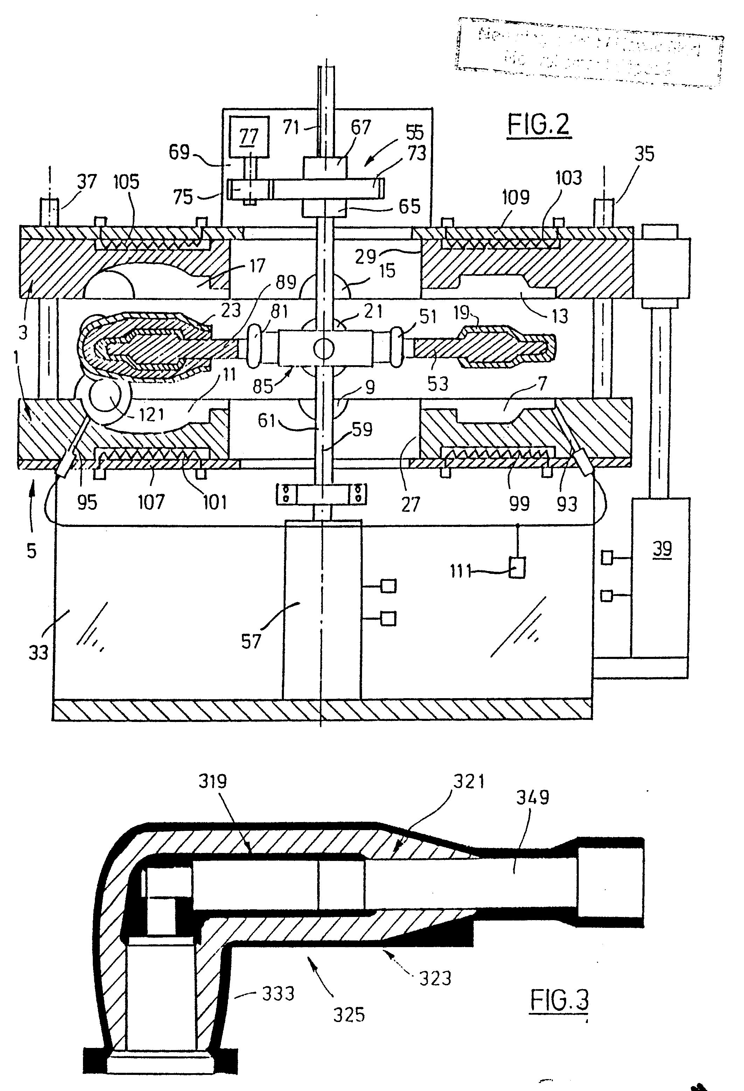

The injection molding device which is diagrammatically illustrated in Figs. 1 and 2 contains an injection mold 5 formed by two injection mold parts, 1, 3, which mold can be closed and opened by relative movement of the mold parts 1 and 3. The mold parts 1 and 3 include mold part cavities 7, 9, 11 and 13, 15, 17, respectively, for forming different partial articles 19, 21, 23 which form different layers of a sleeve-like article 25 to be manufactured, in this case an enclosure of a high voltage elbow plug connector. In the illustrated embodiment, the mold parts 1, 3 essentially have the shape of rectangular plates having a recess 27 and 29, respectively, for forming an input and output working station 31 in which the finished article 25 can be removed and possibly the manufacture of a further article can be initiated.

In the illustrated embodiment, the injection mold parts 1, 3 are arranged on top of another on a base frame 33 and thus form a lower die and an upper die, respectively. The lower mold part 1 is stationarily arranged at the base frame 33, and the upper mold part 3 is vertically movable on rods, for instance 35, 37, by means of a mold drive 39 which is only diagrammatically indicated, between the illustrated open position and a closed position in which opposite partial mold cavities, for instance 7 and 13, each form together a mold cavity in the illustrated embodiment, three further working stations 41, 43, 45 are provided, in addition to the input and output working station 31, each of which comprises co-operating partial mold cavities. In the illustrated embodiment, the working stations 31, 41, 43, 45 are arranged on a circular path 47 at distances of 90°.

A sleeve-shaped elastomeric article 25 to be manufactured is produced by layer-wise injection molding on a core the shape of which corresponds to the cavity 49 of the article to be manufactured. To this end, a core carrier 51 is provided which in the illustrated embodiment forms a radial carrier arm with respect to the circular path 47, and is designed to receive a core 53. In the input and output working station 31, the core 53 can be easily connected to, or removed from, the core carrier 51, for instance by the aid of a (non-illustrated) snap connection. The core carrier 51 is movable by means of a core carrier moving device 55 in correspondence with the closing and opening movement of the form parts 1 and 3 so that the core 53 is successively movable into and out of the working stations 31, 41, 43, 45. When the injection mold is closed, the core will be disposed in the mold cavities 7/13, 9/15, 11/17 formed by the partial mold cavities, in positions in each of which a layer-like partial article 19, 21, 23, respectively, which is to be manufactured there can be produced by injection molding. The illustrated core carrier moving device 55 includes a hydraulic cylinder 57 having a piston rod 61 arranged in the axis 59 of the circular path 47. The core carrier 51 is secured to the piston rod 61. The piston rod 61 extends upwards beyond the upper mold part 3 and is rotatably and shiftably supported in that area in bearings 65, 67; these bearings are secured at a carrier 69 which in turn is secured to the upper mold part 3. In the range of its free end, the piston rod 61 has a longitudinal groove 71. Between the bearings 65, 65, a gear 73 is unshiftably journalled, which is coupled with the longitudinal groove 71 for common rotation, the gear 73 meshing with a drive gear 75 of a controllable drive motor 77. The rotative drive formed in this manner permits a controlled rotation of the piston rod 61 and the parts secured thereto, for instance the core carrier 51. Moreover, the piston rod 61 is controllably movable in the direction of its axis 59 by means of the hydraulic cylinder 57.

In the illustrated embodiment, a plurality of core carrier, i.e. the already mentioned core carrier 51 as well as the further core carriers 79, 81, 83, are united to form a core carrier compound 85 which is secured to the piston rod 61, the core carriers being mutually spaced in correspondence with the distances between the working positions 31, 41, 43, 45 (i.e. 90° in this case). In the working phases illustrated in Figs. 1 and 2, cores 87, 89, 91 are provided also the further core carriers. Thus, working phases in the sense of consecutive steps of the manufacture of the article 25 can be simultaneously proceed in the working stations 31, 41, 43, 45. In the illustrated embodiment, the core carrier compound 85 forms a turret. This makes a rapid operation within a narrow space possible.

In the injection mold 5, feed lines 93, 95, 97 for flowable, curable plastic mass extend to the mold cavities 7/13, 9/15, 11/17. Furthermore, controllable heating devices (normally electrical heating cartridges) 99, 101, 103, 105 are provided in the injection mold parts 1 and 3. In the illustrated embodiment, there is the particular feature that at least one feed line is essentially free of the influence of the heating devices. Thereby, a curing of the plastic mass is avoided in that feed line, and the mass being left in the line can be used during the next injection operation, which will result in a considerable saving of plastic mass. Normally, particularly injectable plastic masses which have been made electrically conductive are very expensive; just for those masses, the use of the aforementioned non-heated feed lines is thus particularly appropriate. In the illustrated embodiment, an article 25 is manufactured which forms an elbow plug enclosure and comprises an electrically conductive innermost plastic partial article 19 and an electrically conductive outer plastic partial article 23; therebetween, there is an electrically insulating plastic partial article 21. In order to save expensive electrically conductive plastic mass, the feed lines 93 and 95 serving for the injection molding of the said partial articles 19 and 23, extend in areas which are essentially free of the influence of the heating devices.

In the illustrated embodiment, the injection mold parts 1 and 3 each carry a heat insulating plate 107 and 109, respectively, on their outer sides, and the said feed lines 93 and 95 extend across a short distance through the lower heat insulating plate 107 to the outside where they extend to a common connection 111.

In the working station 43, usual, i.e. electrically insulating, plastic mass is used, which is less valuable. Therefore, a feed line 113 can be used there which extends in the usual manner in the mold portion surface 115 and is under the influence of the heating devices so that the mass being in the feed line 113 will cure after the injection molding step, and will form legs which will be torn off when the manufactured get loose from the partial mold cavities.

In the illustrated embodiments, a great variety of moldable shapes are made possible in that the mold parts 1 and 3, at least one auxiliary core can be selectively shifted into a mold cavity. In the illustrated embodiment, an auxiliary core 117, 119, 121 is provided in each of the working stations 41, 43, 45. In their extended positions, as illustrated in Fig. 1, these auxiliary cores form extensions of the cores 53, 87, 89, respectively, and serve to manufacture an angular portion 123 of the article 25. After each injection molding cycle, the auxiliary cores are retracted so that they will not impede the progress of the cyclic manufacturing process. The pneumatic actuating devices of the auxiliary cores are not illustrated. Furthermore, also the commanding the controlling devices which are necessary to obtain a coordinated automatic mode of operation of the apparatus are not illustrated. They can be readily provided by skilled people.

The apparatus illustrated in Figs. 1 and 2 operates as follows:

Fig. 1 shows a phase in which an injection molding cycle has just been terminated. In the working station 41, a first partial article 19 has been injection molded, as a first product, on the core 53 and an auxiliary core 117 extended thereto. In the working station 41, a second partial article 21 has been injection molded onto a first pre-product which has been injection molded onto the core 87 in a preceding injection molding cycle, and thus a second product 125 has been obtained.

In the working station 45, a third partial article 23 has been injection molded onto a second product which has been produced in the preceding injection molding cycle, and thus a third product 127 has been manufactured. From that third product 127, the first article 25 will be obtained in the working station 45 by thermal curing, and the first article can be removed from the core in the subsequent cycle at the input and output station 31, as has already been described.

At the end of the injection molding cycle illustrated in Fig. 1, the auxiliary cores 117, 119, 121, are retracted to (non-illustrated) positions in which they do not interfere with the removing of the cores from the mold cavities. Thereafter, the mold parts 1 and 3 are moved away from each other, and the core compound 85 is moved upwards until it is positioned between the mold parts 1 and 3 (Fig. 2). During this step, legs will be torn off and removed.

Fig. 2 shows the condition so obtained. Thereafter, the core compound 85 is advanced in the rotating direction 129 by 90° and then again moved downwards. The mold parts 1 and 3 are closed, and the auxiliary cores 103, 105 and 107 are moved into the advanced positions. Then, injection molding mass is supplied until the conditions of Fig. 1 is again obtained.

Fig. 3 shows a scale which is enlarged as compared with Figs. 1 and 2, an article 325 which has been manufactured in the aforedescribed manner and has a similar shape as the article 25 according to Figs. 1 and 2. Again, this is an elastomeric enclosure for the electric medium voltage elbow plug connector. Accordingly, the article 325 includes an angular part 333. The illustrated article 325 consists of an inner partial article 319 which forms an elastomeric field smoothening layer, an outer particle article 323 which forms an electrically slightly conductive elastomeric shield layer, and a central partial article 323 which is interposed without gaps and forms an insulating layer. The cavity 349 of the article 325 has a shape which is determined by the cores applied during the manufacture and is diminished so that a female part and a male part of an electrical plug connector can be inserted and interplugged while being contiguously enclosed.

## Claims

1. Method for manufacturing resilient sleeve-shaped plastic articles which comprise a plurality of layers of joined sleeve-shaped plastic partial articles and are shiftable onto electrical medium or high voltage connectors, particularly elbow plug connectors, by layer-wise injection molding, the method preferably including manufacturing a first, innermost partial article from electrically slightly conductive plastic material, a further partial article from electrically insulating plastic material, and an outer partial article from electrically slightly conductive plastic material, characterized in that a series of cores (53, 87, 89) having a shape corresponding to the cavity (49) of the article (25) are cyclically advanced through a series of mold cavities (7/13, 9/15, 11/17) and are provided, by injection molding, in each of the mold cavities with a partial article which is subsequent in the layering, with a free core being present at the beginning of the series, and a finished article being removable at the end of the series, and preferably being separated from the core.

2. The method according to claim 1, characterized in that the various partial article (19, 21, 23) are manufactured essentially simultaneously.

3. The method according to claim 1 or 2, characterized in that the mold cavities (7/13, 9/15, 11/17) are opened and closed in common.

4. The method according to claim 2 or 3, characterized in that the mold cavities (7/13, 9/15, 11/17) are opened and closed by relative movement of two injection mold parts (1, 3) which each contain a series of partial mold cavities.

5. The mold according to one of the preceding claims, characterized in that in at least one of the mold cavities, the introduced core is supplemented by an auxiliary core (117, 119, 121) moved into the mold cavity, and the auxiliary core is removed from the respective mold cavity prior to the removal of the core.

6. An apparatus for performing the method according to one of the preceding claims, comprising an injection mold (5) in which a mold cavity (7/13) can be opened and closed by relative movement of injection mold parts (1, 3) in which partial mold cavities (7, 13) are provided, characterized in that the injection mold (5) is designed to form a plurality of mold cavities (7/13, 9/15, 11/17) of which each is designed to manufacture a certain partial article (19, 21, 23) of the article (25) to be manufactured, and in that a core holder (51) is provided to hold a core (53) corresponding to the cavity (49) of the article (25) to be manufactured, and is drivable by means of a core holder moving device (55) in corresondence with a cyclic opening and closing movement of the mold parts (1, 3) so that the core (53) is cyclically movable successively into and out of working stations (41, 43, 45) in each of which the core is disposed within the mold cavity in a position where a layer-like partial article (19, 21, 23) to be produced there can be produced by injection molding.

7. The apparatus according to claim 6, characterized in that the injection mold parts (1, 3) comprise partial mold cavities (7, 9, 11, 13, 15, 17) for forming a series of mold cavities (7/13, 9/15, 11/17) in correspondence with a series of partial articles (19, 21, 23) to be produced successively.

8. The apparatus according to claim 6 or 7, characterized in that a plurality of core carriers (51, 79, 81, 83) are united to form a core carrier compound (85) in which the core carriers are disposed at distances which correspond to the distances between the working stations (31, 41, 43, 45).

9. The apparatus according to one of claims 6 to 8, characterized in that a plurality of working stations (31, 41, 43, 45) are distributed in a circular path (47).

10. The apparatus according to claims 8 and 9, characterized in that the core carrier compound (85) forms a turret.

11. The apparatus according to one of the claims 6 to 10, wherein feed lines (93, 95, 113) for flowable curable plastic mass extend to the partial mold cavities provided in the mold parts (1, 3) characterized in that at least one feed line (93, 95) is essentially free of the influence of heating means (99, 101, 103, 105).

12. The apparatus according to one of the claims 6 to 11, characterized in that the mold parts (1, 3), at least one auxiliary core (117, 119, 121) is selectively movable into a mold part cavity to become connected with the core (53, 87, 89) which is present there.

FIG.1

0 266 900

FIG.2

FIG.3